# EUROPÄISCHE PATENTSCHRIFT

(11) **EP 1 671 049 B1**
(45) Veröffentlichungstag und Bekanntmachung des Hinweises auf die Patenterteilung: **14.11.2007**
(21) Anmeldenummer: 04764827.4
(22) Anmeldetag: 04.09.2004
(51) Int. Cl.: F16H 3/095

(54) **SCHALTGETRIEBE MIT ZWEI VORGELEGEWELLEN**
GEAR BOX WITH TWO PINION SHAFTS
BOITE DE VITESSES A DEUX ARBRES INTERMEDIAIRES

(30) Priorität: 08.10.2003 DE 10346658
(43) Veröffentlichungstag der Anmeldung: 21.06.2006
(73) Patentinhaber: ZF FRIEDRICHSHAFEN AG, 88038 Friedrichshafen (DE)
(72) Erfinder: BADER, Josef, 88045 Friedrichshafen (DE)
(86) Internationale Anmeldenummer: PCT/EP2004/009876
(87) Internationale Veröffentlichungsnummer: WO 2005/045281

(56) Entgegenhaltungen:
- EP-A- 0 009 775
- DE-A- 19 604 824

## Beschreibung

Die Erfindung betrifft ein Schaltgetriebe mit zwei Vorgelegewellen zur Leistungsteilung nach dem Oberbegriff von Anspruch 1.

Moderne, leistungsstarke Fahrzeuggetriebe weisen meist eine Hauptgetriebegruppe mit einem mehrgängigen Grundgetriebe und einer vor- oder nachgeschalteten Splitgruppe und/oder eine nachgeschaltete Bereichsgetriebegruppe auf. Sie weisen überwiegend in einem Getriebegehäuse als eine erste Welle eine Eingangswelle und als eine zweite Welle eine Zentralwelle oder Hauptwelle auf, die auch die Ausgangswelle sein kann, sowie eine oder mehrere Vorgelegewellen. Die Eingangswelle und die Hauptwelle liegen dabei im wesentlichen konzentrisch zueinander.

Mit Rücksicht auf die Laufeigenschaften und die Laufruhe können derartige Getriebe mit Schrägverzahnung, zumindest für den Vorwärtsfahrbereich, ausgelegt sein. Die axialen Kräften aus der Schrägverzahnung müssen mit einer axialen Lagerung aufgefangen und auf das Gehäuse abgeleitet werden.

Getriebe in den beschriebenen Bauweisen können mit einer Vorgelegewelle oder mit mehreren Vorgelegewellen ausgestattet sein.

Bei Getrieben mit Leistungsteilung auf zwei Vorgelegewellen weist die Hauptgetriebegruppe zwei im wesentlichen axial hintereinander angeordnete Wellen auf, von denen die eine Welle, die entweder die Eingangswelle oder die Hauptwelle des Hauptgetriebes ist, radial und axial fest gelagert ist, während die jeweils andere Welle wegen des notwendigen Lastausgleichs schwimmend, d. h. radial beweglich gelagert ist. Dabei ist zu beachten, dass eine leichtgängige radiale Schwenkbewegung der schwimmenden Welle möglich ist.

Bei Getrieben mit zwei Vorgelegewellen kann der Lastausgleich vorzugsweise so gestaltet sein, dass die Eingangswelle starr zum Gehäuse gelagert ist, die Vorgelegewellen starr zum Gehäuse gelagert sind und die Hauptwelle schwimmend in den Zahnrädern, welche sich im Kraftfluss befinden, gelagert ist.

Die bekannten Stufenwechselgetrieben für Nutzfahrzeuge weisen einen drei- oder vierstufigen Haupt- oder Grundgetriebeteil und ein dem Hauptgetriebe vor- oder nachgeschaltetes Splittergetriebe als Hilfsgetriebe auf, das die Gangstufenzahl des Hauptgetriebes verdoppelt, indem es die Übersetzungsstufen des Hauptgetriebes aufsplittet. Ein dem Hauptgetriebe nachgeschaltetes Gruppengetriebe erweitert den Übersetzungsbereich des Hauptgetriebes. Das Gruppengetriebe kann in Form eines Planetengetriebes oder in Form einer Anordnung von Stirnzahnrädern ausgebildet sein.

Aus der EP-A1 0 009 775*,* als nächstliegender Stand der Technik angesehen, ist ein einem Hauptgetriebe mit zwei Vorgelegewellen zur Leistungsverteilung nachgeschaltetes Gruppengetriebe mit Stirnzahnrädern bekannt. Das Gruppengetriebe weist zwei Vorgelegewellen auf, die drehunabhängig von den Vorgelegewellen des Hauptgetriebes sind. Auf der Hauptwelle des Getriebes ist ein Zahnrad schwimmend angeordnet, das mit je einem Zahnrad auf jeder der Vorgelegewellen des Gruppengetriebes kämmt. Dieses Getriebe weist keine ausreichende Aufnahmekapazität von beispielsweise aus der Verzahnung resultierenden Axialkräften auf.

Aus der DE-A1 196 04 824 der Anmelderin ist ein Schaltgetriebe mit einem Gruppengetriebe in Planetenbauweise bekannt geworden. An den Verzahnungen des Planetengetriebes sind Druckkämme vorgesehen, um die aus Schrägverzahnungen resultierenden Axialkräfte aufzunehmen.

Der Erfindung liegt die Aufgabe zugrunde, an einem Getriebe mit zwei Vorgelegewellen zur Leistungsverteilung die Axiallagerung zu verbessern.

Die Aufgabe wird gelöst durch ein Schaltgetriebe mit den Merkmalen des Anspruchs 1. Ausgestaltungen sind Gegenstand von Unteransprüchen.

Bei einem Gruppengetriebe mit Stirnrädern erreicht in der schnellen Schaltstellung des Gruppengetriebes das auf der Hauptwelle angeordnete Zahnrad, das mit Zahnräder der Vorgelegewellen des Gruppengetriebes kämmt, im nicht geschalteten Zustand sehr hohe Drehzahlen. Dadurch wir die Lagerung mit Axiallagern problematisch. Erfindungsgemäß weist daher ein Schaltgetriebe mit einem in einem Gehäuse angeordneten Hauptgetriebe und einem nachgeschalteten Gruppengetriebe; bei dem das Gruppengetriebe eine Leistungsteilung auf zwei Vorgelegewellen aufweist und bei dem auf einer Hauptwelle des Hauptgetriebes ein Zahnrad radial beweglich angeordnet ist, das mit je einem ersten Zahnrad auf je einer der Vorgelegewellen kämmt, und bei dem in dem Gehäuse des Schaltgetriebes eine Abtriebswelle radial und axial fest angeordnet ist, mit der ein Zahnrad verbunden ist, das mit je einem zweiten Zahnrad auf jeder der Vorgelegewellen kämmt, Druckkämme auf, mit denen das mit den ersten Zahnrädern der Vorgelegewellen kämmende Zahnrad auf der Hauptwelle in seiner axialen Position relativ zur Abtriebwelle festgelegt ist. Bevorzugterweise sind die Vorgelegewellen in ihrer axialen Position mit Druckkämmen relativ zur Abtriebswelle festgelegt.

In einer besonders vorteilhaften Ausgestaltung der Erfindung weist das Zahnrad auf der Abtriebswelle Druckkämme auf, die mit Druckkämmen, die an den zweiten Zahnrädern der Vorgelegewellen ausgebildet sind, zur Aufnahme von axialen Kräften in Kontakt stehen, und das Zahnrad auf der Hauptwelle weist Druckkämme auf, die mit Druckkämmen, die an den ersten Zahnrädern der Vorgelegewellen ausgebildet sind, zur Aufnahme von axialen Kräften in Kontakt stehen.

Besonders vorteilhaft ist die Abtriebswelle radial und axial durch eine doppelte Kegelrollenlagerung im Gehäuse gehalten.

Eine weitere vorteilhafte Ausführungsform zeigt die Vorgelegewellen mit lediglich einer radialen Lagerung im Gehäuse, die vorzugsweise Rollenlager umfasst.

Die Führung bzw. axiale Festlegung der Vorgelegewellen und des Zahnrades auf der Hauptwelle geschieht mit Hilfe der Druckkämme. Die Schmierung der Druckkämme kann von außen erfolgen und ist einfach und effektiv. Während der Drehmomentübertragung der Zahnräder der Vorgelegewelle sind keine axialen Zahnkräfte von den Lagern aufzunehmen und an das Gehäuse zu übertragen. Daher kann die Axiallagerung der Vorgelegewellen entfallen und die Vorgelegewellen können lediglich in radial lagernden Rollenlagern gehalten sein. Die axiale Fixierung des gesamten Radsatzes des Gruppengetriebes erfolgt durch die Lagerung der Abtriebswelle.

Durch eine exakte Fertigung der Druckkämme an dem Zahnrad der Hauptwelle wird sichergestellt, dass unter Beibehaltung der axialen Fixierung eine erforderliche radiale Bewegungsfreiheit gewährleistet wird.

Die Erfindung wird anhand einer Zeichnung näher erläutert.

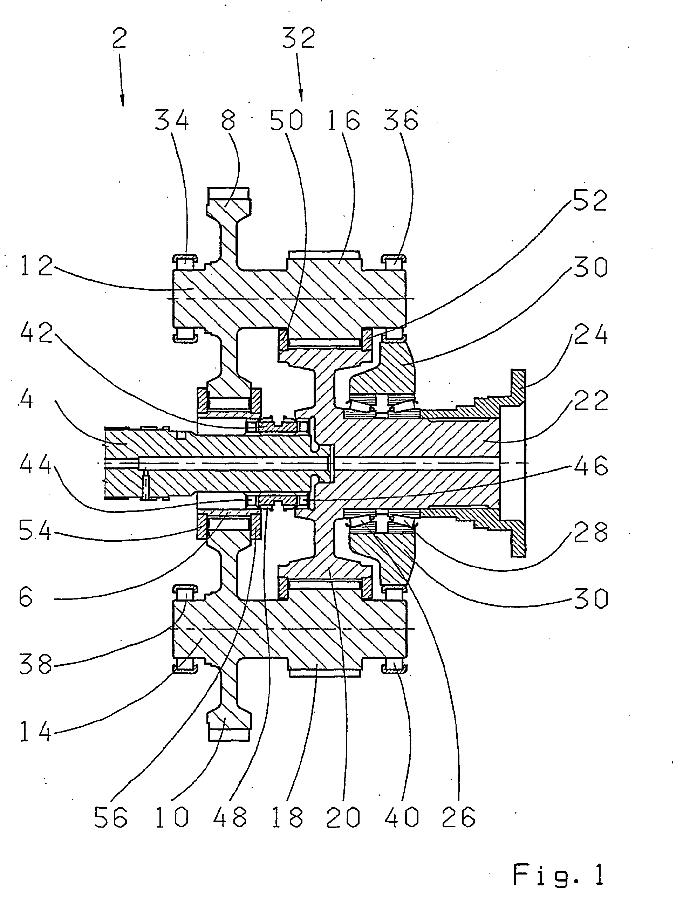

In der Fig. 1 umfasst bei einem nicht näher dargestellten Schaltgetriebe ein Hauptgetriebe 2 eine Hauptwelle 4, an deren Ende ein Zahnrad 6 mit einem radialen Spiel angeordnet ist. Dazu ist die radiale Lagerung des Zahnrades 6 mit seiner Außenverzahnung lediglich in den Außenverzahnungen von zwei ersten Zahnrädern 8 und 10 vorgesehen. Die ersten Zahnräder 8 und 10 sind jeweils fest auf einer Vorgelegewelle 12 und 14 angeordnet, bzw. einstückig mit den Vorgelegewellen gebildet. Jede Vorgelegewelle 12, 14 weist je ein zweites Zahnrad 16 und 18 auf, die jeweils ebenfalls fest auf einer der Vorgelegewellen 12 und 14 angeordnet bzw. einstückig mit den Vorgelegewellen 12, 14 gebildet sind.

Die beiden zweiten Zahnräder 16 und 18 kämmen mit ihren Außenverzahnungen mit der Außenverzahnung an einem Zahnrad 20, das fest an der Abtriebswelle 22 des Schaltgetriebes angeordnet ist oder als ein Stück mit der Abtriebswelle 22 ausgebildet ist. An der Abtriebswelle 22 ist ein Abtriebsflansch 24 befestigt, mit dem das Schaltgetriebe mit weiteren Elementen eines Fahrzeugantriebsstranges verbunden ist, die hier nicht gezeigt sind.

Die Abtriebswelle 22 ist mit zwei Kegelrollenlagern 26 und 28 im Gehäuse 30 des Schaltgetriebes bzw. eines Gruppengetriebes 32 gelagert, das dem Hauptgetriebe 2 nachgeschaltet ist. Ebenfalls im Gehäuse 30 gelagert sind die beiden Vorgelegewellen 12 und 14 in jeweils zwei Rollenlagern 34, 36, bzw. 38, 40. Diese Rollenlager 34, 36, 38, 40 nehmen lediglich radiale Kräfte auf und leiten sie an das Gehäuse 30 weiter. Alle Verzahnungen der Zahnräder 8, 10, 16, 18, 20 weisen Schrägverzahnungen auf, aus denen Axialkräfte resultieren, zu deren Aufnahme und Weiterleitung die Rollenlager 34, 36, 38, 40 nicht geeignet sind.

Am Ende der Hauptwelle 4 ist eine Schaltmuffe 42 angeordnet, die über eine Innenverzahnung drehfest aber axial verschiebbar mit der Hauptwelle 4 verbunden ist. Durch einen hier nicht gezeigten Stellmechanismus kann die Schaltmuffe 42 axial bewegt werden. Dabei verbindet die Schaltmuffe 42 mit ihrer Außenverzahnung 48 die Hauptwelle 4 entweder mit der Innenverzahnung 44 am Zahnrad 6 auf der Hauptwelle 4 oder aber mit der Innenverzahnung 46 der Abtriebswelle 22 zur Bildung einer direkten Verbindung zwischen Hauptwelle 4 und Abtriebswelle 22. Wenn es gewünscht ist, kann die Schaltmuffe auch eine neutrale Schaltstellung einnehmen, bei der keine Verbindung mit einer der Innenverzahnungen 44, 46 vorliegt.

Mit den Kegelrollenlagern 26 und 28 ist die Abtriebswelle 22 axial fest im Gehäuse 30 gelagert. Seitlich an der Außenverzahnung des Zahnrades 20 an der Abtriebswelle 22 ist je ein Druckkamm 50 und 52 angeordnet. Die Druckflächen an den Druckkämmen 50 und 52 reagieren mit entsprechend ausgebildeten Druckflächen an den Zahnrädern 16 und 18 und fixieren dadurch die Vorgelegewellen 12 und 14 in axialer Richtung. Damit sind auch die Zahnräder 8 und 10 an den Vorgelegewellen 12 und 14 axial fixiert.

Seitlich an der Außenverzahnung des Zahnrades 6 auf der Hauptwelle 4 ist je ein Druckkamm 54 und 56 angeordnet. Die Druckflächen an den Druckkämmen 54 und 56 reagieren mit entsprechend ausgebildeten Druckflächen an den Zahnrädern 8 und 10 an den Vorgelegewellen 12 und 14. Da die Zahnräder 8 und 10, wie oben beschrieben, axial fixiert sind, wird über die Druckkämme 54 und 56 auch das Zahnrad 6 axial fixiert, so dass die Problematik der Axiallagerung bei hohen Drehzahl des Zahnrades 6 beseitigt ist.

### Bezugszeichen

- 2: Hauptgetriebe
- 4: Hauptwelle
- 6: Zahnrad
- 8: Zahnrad
- 10: Zahnrad
- 12: Vorgelegewelle
- 14: Vorgelegewelle
- 16: Zahnrad
- 18: Zahnrad
- 20: Zahnrad
- 22: Abtriebswelle
- 24: Abtriebsflansch
- 26: Kegelrollenlager
- 28: Kegelrollenlager
- 30: Gehäuse
- 32: Gruppengetriebe
- 34: Rollenlager
- 36: Rollenlager
- 38: Rollenlager
- 40: Rollenlager
- 42: Schaltmuffe
- 44: Innenverzahnung
- 46: Innenverzahnung
- 48: Außenverzahnung
- 50: Druckkamm
- 52: Druckkamm
- 54: Druckkamm
- 56: Druckkamm

## Patentansprüche

1. Schaltgetriebe mit einem in einem Gehäuse (30) angeordneten Hauptgetriebe (2) und einem nachgeschalteten Gruppengetriebe (32), wobei das Gruppengetriebe (32) eine Leistungsteilung auf zwei Vorgelegewellen (12, 14) aufweist und auf einer Hauptwelle (4) des Hauptgetriebes (2) ein Zahnrad (6) radial beweglich angeordnet ist, das mit je einem ersten Zahnrad (8, 10) auf je einer der Vorgelegewellen (12, 14) kämmt, und in dem Gehäuse (30) des Schaltgetriebes eine Abtriebswelle (22) radial und axial fest angeordnet ist, mit der ein Zahnrad (20) verbunden ist, das mit je einem zweiten Zahnrad (16, 18) auf jeder der Vorgelegewellen (12, 14) kämmt, **dadurch gekennzeichnet, dass** das mit den ersten Zahnrädern (8, 10) der Vorgelegewellen (12, 14) kämmende Zahnrad (6) auf der Hauptwelle (4) mit Druckkämmen (50, 52, 54, 56) in seiner axialen Position relativ zur Abtriebwelle (22) festgelegt ist.

2. Schaltgetriebe nach Anspruch 1, **dadurch gekennzeichnet, dass** die Vorgelegewellen (12, 14) mit Druckkämmen (50, 52) in ihrer axialen Position relativ zur Abtriebswelle (22) festgelegt sind.

3. Schaltgetriebe nach Anspruch 1 oder 2, **dadurch gekennzeichnet , dass** das Zahnrad (20) auf der Abtriebswelle (22) Druckkämme (50, 52) aufweist, die mit Druckkämmen, die an den zweiten Zahnrädern (16, 18) der Vorgelegewellen (12, 14) ausgebildet sind, zur Aufnahme von axialen Kräften in Kontakt stehen und das Zahnrad (6) auf der Hauptwelle (4) Druckkämme (54, 56) aufweist, die mit Druckkämmen, die an den ersten Zahnrädern (8, 10) der Vorgelegewellen (12, 14) ausgebildet sind, zur Aufnahme von axialen Kräften in Kontakt stehen.

4. Schaltgetriebe nach einem der Ansprüche 1 bis 3, **dadurch gekennzeichnet, dass** die Abtriebswelle (22) radial und axial durch eine doppelte Kegelrollenlagerung (26, 28) im Gehäuse (30) gehalten ist.

5. Schaltgetriebe nach einem der Ansprüche 1 bis 4, **dadurch gekennzeichnet , dass** die Vorgelegewellen (12, 14) lediglich eine radiale Lagerung (34, 36, 38, 40) im Gehäuse (30) aufweisen.

6. Schaltgetriebe nach Anspruch 5, **dadurch gekennzeichnet, dass** die radiale Lagerung Rollenlager (34, 36, 38, 40) umfasst.

## Claims

1. Manual transmission with a main transmission (2) arranged in the housing (30) and a downstream group transmission (32) whereas the group transmission (32) features a split of performance with two countershafts (12, 14) as well as a radial arranged gear (6), on one of the main shafts (8, 10) of the main transmission (2), which meshes with the first gear (8, 10) respectively from one of the corresponding countershafts (12, 14) and where an output shaft (22) is arranged in a radial manner and fixed axially to the housing (39) of the manual transmission, that is connected to a gear (20) which meshes with the second gear (16, 18) respectively from each of the countershafts, which is **characterized in that** the gear (6) meshing with the first gears (8, 10) of the countershafts (12, 14) is arranged on the main shaft (4) with thrust cones (50, 52, 54, 56) in an axial position and relative to the output shaft (22).

2. Manual transmission according to claim 1, **characterized in that** the countershafts (12, 14) with the thrust cones (50, 52) are fixed in their axial position relative to the output shaft (22).

3. Manual transmission according to claim 1 or 2, **characterized in that** the gear (20) on the output shaft (22) features thrust cones (50, 52) which, together with the thrust cones at the secondary gears (16, 18) of the countershafts (12, 14), are in contact for the absorption of axial forces and that the gear (6) on the main shaft (4) features thrust cones (54, 56) which, together with the thrust cones at the primary gears (8, 10) of the countershafts (12, 14), are in contact for the absorption of axial forces.

4. Manual transmission according to one of the claims 1 up to 3, **characterized in that** the output shaft (22) is fixed both radially and axially by means of double taper roller bearings (26, 28) in the housing (30).

5. Manual transmission according to one of the claims 1 up to 4, **characterized in that** the countershafts (12, 14) only feature a radial support (34, 36, 38, 40) in the housing (30).

6. Manual transmission according to claim 5, **characterized in that** the radial support comprises roller bearings (34, 36, 38, 40).

## Revendications

1. Boîte de vitesses mécanique dotée d'un arbre principal (2) disposé dans un carter (30) et d'une boîte de gammes en aval (32), sachant que la boîte de gammes (32) comporte une répartition de la puissance sur deux arbres intermédiaires (12, 14) et que un engrenage (6) est disposé de façon à pouvoir être déplacé sur un arbre principal (4) de la boîte principale (2), cet engrenage engrenant avec le premier engrenage (8,10) des arbres intermédiaires (12, 14), et que dans le carter (30) de la boîte de vitesses mécanique est disposé radialement et axialement un arbre de sortie (22), auquel est relié un engrenage (20) engrenant avec le deuxième engrenage (16, 18) des arbres intermédiaires (12, 14), **caractérisée en ce que** la position axiale relative à l'arbre de sortie (22) de l'engrenage (6) sur l'arbre principal (4) engrenant avec les premiers engrenages (8, 10) des arbres intermédiaires (12, 14) est définie à l'aide de peignes de pression (50, 52, 54, 56).

2. Boîte de vitesses mécanique selon la revendication 1, **caractérisée en ce que** la position axiale relative à l'arbre de sortie (22) des arbres intermédiaires (12, 14) est définie à l'aide de peignes de pression (50, 52).

3. Boîte de vitesses mécanique selon les revendications 1 ou 2, **caractérisée en ce que** l'engrenage (20) sur l'arbre de sortie (22) comporte des peignes de pression (50, 52), ceux-ci étant en contact avec les peignes de pression réalisés sur les deuxièmes engrenages (16, 18) des arbres intermédiaires (12, 14) et étant utilisés pour l'absorption de forces axiales et **en ce que** l'engrenage (6) sur l'arbre principal (4) comporte des peignes de pression (54, 56) étant en contact avec des peignes de pression réalisés sur les premiers engrenages (8, 10) des arbres intermédiaires (12, 14) et étant utilisés pour l'absorption de forces axiales.

4. Boîte de vitesses mécanique selon une des revendications 1 à 3, **caractérisée en ce que** l'arbre de sortie (22) est maintenu radialement et axialement dans le carter (30) par un double palier à galets coniques (26, 28).

5. Boîte de vitesses mécanique selon une des revendications 1 à 4, **caractérisée en ce que** les arbres intermédiaires (12, 14) comportent seulement des paliers radiaux (34, 36, 38, 40) dans le carter (30).

6. Boîte de vitesses mécanique selon la revendication 5, **caractérisée en ce que** les paliers radiaux comportent des roulements à rouleaux (34, 36, 38, 40).
